# EUROPEAN PATENT APPLICATION

(11) **EP 4 768 763 A1**
(43) Date of publication of application: **01.07.2026**
(21) Application number: 25225427.1
(22) Date of filing: 19.12.2025
(51) Int. Cl.: F16K 17/04, H01M 50/333

(54) **PRESSURE REGULATING VALVE**

(30) Priority: 27.12.2024 JP 2024233104
(71) Applicant: NOK Corporation, Minato-ku Tokyo 105-8585 (JP)
(72) Inventor: HAGIWARA, Naoki, Makinohara-shi, Shizuoka, 4210532 (JP)
(74) Representative: Global IP Europe Patentanwaltskanzlei

(57) **Abstract**

A pressure regulating valve is provided that can inhibit lowering of sealing performance due to force from an outside without adding elements. A pressure regulating valve 1 includes a base member 2 and a valve body member 3. The base member 2 has a first sealing portion 11 which surrounds an opening portion 120 from an outer periphery side and is annular, a second sealing portion 12 with which the valve body member 3 is provided to be contactable and is annular, and a support portion 21 which supports the valve body member 3. The support portion 21 supports a valve body member 2 such that the valve body member 2 is movable so as to be contactable with the second sealing portion 12. The valve body member 3 has a contact portion 31 and a side wall part 32 which extends from the contact portion 31. The contact portion 31 is contactable with the second sealing portion 12. The side wall part 32 is annular so as to cover the second sealing portion 12 from the outer periphery side and has an inclined portion 33. The inclined portion 33 expands to the outer periphery side as progresses downward.

## Description

### [Technical Field]

The present invention relates to a pressure regulating valve.

### [Background Art]

For example, electric vehicles (EV) and hybrid electric vehicles (HEV) have battery packs. A battery pack has a plurality of cells (single cells) in a housing. In a battery pack having a cell such as a lithium ion battery, during usage, for example, gas such as hydrogen is produced due to over-discharge or the like, pressure of an internal space of each cell of a battery rises due to that, and the cell might burst. In order to avoid such a rise in the pressure of the internal space of the cell, the battery has an explosion-proof valve to allow the internal space to open when the pressure of the internal space rises. Further, in order to prevent the pressure in the housing from excessively rising due to gas discharged from the battery in an internal portion, the housing of the battery pack has a pressure regulating valve which opens the internal space of the housing when the pressure in the space of the internal portion of the housing rises.

For example, in recent years, due to higher outputs of batteries, the amount of gas to be discharged to the internal space of the housing of the battery pack has become larger. For these reasons, an improvement in sealing performance has been demanded for the pressure regulating valve of the battery pack, and various kinds of measures have been devised (for example, see Patent Literature 1).

### [Citation List]

### [Patent Literature]

[Patent Literature 1]
Japanese Patent Laid-Open No. 2020-194719

### [Summary of Invention]

### [Technical Problem]

However, there are cases where a battery pack is mounted on a vehicle so as to be exposed to an outside, and in this case, force might be applied to the pressure regulating valve from the outside. For example, water at a high pressure, which is jetted from a high-pressure washing machine, might hit the pressure regulating valve. In this case, the pressure regulating valve might be opened by receiving external force by water at a high pressure, and water might enter an inside of a housing. As in Patent Literature 1, among battery packs in the related art, there have been a battery pack that has a cover for covering the pressure regulating valve, and a battery pack that has a configuration capable of inhibiting force from being applied from the outside to the pressure regulating valve.

However, the configurations in the related art, which can inhibit force from being applied from the outside to the pressure regulating valve, incur an increase in the number of components, an increase in space, an increase in manufacturing costs, and so forth. Thus, with respect to the configurations in the related art, which can inhibit force from being applied from the outside to the pressure regulating valve, there has been a demand for a configuration which does not incur an increase in the number of components, an increase in space, an increase in manufacturing costs, or the like.

The present invention has been made in consideration of the above problems, and an object thereof is to provide a pressure regulating valve that can inhibit lowering of sealing performance due to force from the outside without adding elements.

### [Solution to Problem]

To achieve the above object, a pressure regulating valve according to the present invention is a pressure regulating valve opening and closing an opening portion, the pressure regulating valve including: a base member; and a valve body member, in which the base member has a first sealing portion as an elastic body which surrounds the opening portion from an outer periphery side and is annular around an axis line, a second sealing portion as an elastic body with which the valve body member is provided to be contactable and which is annular around the axis line, and a support portion which supports the valve body member, the support portion is configured to support the valve body member such that the valve body member is movable in the axis line direction so as to be contactable with the second sealing portion, the valve body member has a contact portion and a side wall part which extends from the contact portion toward one side in the axis line direction, the contact portion is configured to be contactable with the second sealing portion, the side wall part is annular around the axis line so as to cover the second sealing portion from the outer periphery side and has an inclined portion, and the inclined portion expands to the outer periphery side as progresses toward the one side in the axis line direction.

In the pressure regulating valve according to one aspect of the present invention, the inclined portion has an inclined surface which faces the outer periphery side and is annular around the axis line, and the inclined surface expands to the outer periphery side as progresses toward the one side in the axis line direction.

In the pressure regulating valve according to one aspect of the present invention, the inclined surface is inclined at an inclination angle as a predetermined angle with respect to the axis line, and the inclination angle is 5° or greater to 45° or smaller.

In the pressure regulating valve according to one aspect of the present invention, the side wall part is configured with the inclined portion.

In the pressure regulating valve according to one aspect of the present invention, the side wall part is configured to be opposite to the second sealing portion, from the outer periphery side, when the contact portion contacts the second sealing portion.

In the pressure regulating valve according to one aspect of the present invention, the side wall part is configured such that an end of the side wall part on the one side in the axis line direction is opposite to the base member via a gap when the contact portion contacts the second sealing portion.

In the pressure regulating valve according to one aspect of the present invention, the side wall part is configured such that rigidity against bending with respect to the contact portion is enhanced.

In the pressure regulating valve according to one aspect of the present invention, the side wall part has a flange portion as an annular portion, which protrudes to the outer periphery side, in a portion of an end of the side wall part on the one side in the axis line direction.

In the pressure regulating valve according to one aspect of the present invention, the contact portion has a contact surface which faces toward the one side in the axis line direction, and the contact surface of the contact portion is contactable with the second sealing portion.

In the pressure regulating valve according to one aspect of the present invention, the support portion has a spring body which urges the valve body member toward the one side in the axis line direction.

### [Advantageous Effect of Invention]

A pressure regulating valve according to the present invention can inhibit lowering of sealing performance due to force from an outside without adding elements.

### [Brief Description of Drawings]

[Fig. 1] Fig. 1 is a view which schematically illustrates a battery pack to which a pressure regulating valve according to an embodiment of the present invention is applied.
[Fig. 2] Fig. 2 is a perspective view which schematically illustrates a configuration of the pressure regulating valve according to the embodiment of the present invention.
[Fig. 3] Fig. 3 is an exploded perspective view of the pressure regulating valve.
[Fig. 4] Fig. 4 is a front view of the pressure regulating valve.
[Fig. 5] Fig. 5 is a rear view of the pressure regulating valve.
[Fig. 6] Fig. 6 is a cross-sectional view illustrating a cross section along line A1-A1 in Fig. **4****.**
[Fig. 7] Fig. 7 is a cross-sectional view illustrating a cross section along line A2-A2 in Fig. 4.
[Fig. 8] Fig. 8 is a partially enlarged cross-sectional view illustrating the vicinity of a side wall part in Fig. 7 while enlarging that.
[Fig. 9] Fig. 9 is a partially enlarged cross-sectional view illustrating a modification example of the side wall part.
[Fig. 10] Fig. 10 is a partially enlarged cross-sectional view illustrating another modification example of the side wall part.
[Fig. 11] Fig. 11 is a cross-sectional view illustrating the pressure regulating valve in a usage state where the pressure regulating valve is mounted on the battery pack and is a cross-sectional view illustrating the pressure regulating valve in a closed state.
[Fig. 12] Fig. 12 is a cross-sectional view illustrating the pressure regulating valve in the usage state where the pressure regulating valve is mounted on the battery pack and is a cross-sectional view illustrating the pressure regulating valve in an open state.
[Fig. 13] Fig. 13 is a cross-sectional view illustrating one example of a modification example of the pressure regulating valve.
[Fig. 14] Fig. 14 is a partially enlarged cross-sectional view illustrating another modification example of the side wall part.

### [Description of Embodiments]

Embodiments of the present invention will hereinafter be described with reference to drawings. Note that in the drawings, there are cases where reference characters are given to not all of a plurality of configuration elements and reference characters of a part of the plurality of configuration elements are omitted.

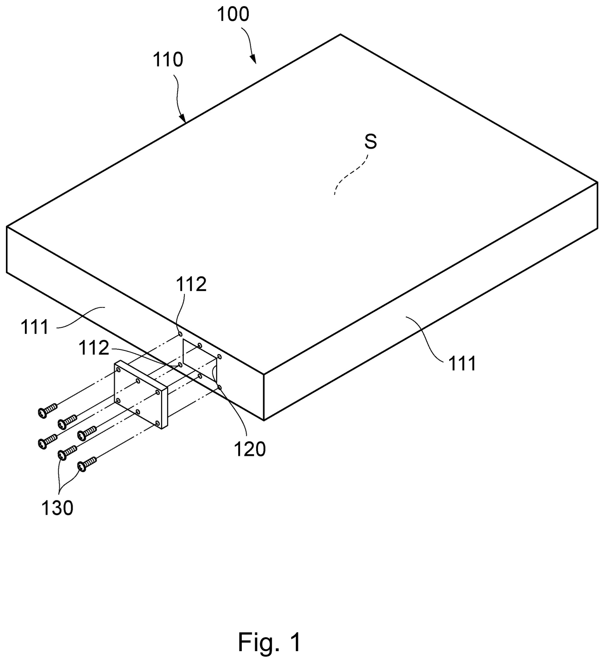

Fig. 1 is a view which schematically illustrates a battery pack 100 to which a pressure regulating valve 1 according to an embodiment of the present invention is applied. As illustrated in Fig. 1, the pressure regulating valve 1 is a pressure regulating valve which opens and closes an opening portion 120 which is formed in a housing 110 of the battery pack 100. A battery 100 is a battery pack used for an EV, an HEV, or the like, for example. A plurality of cells (single batteries) is accommodated in an internal portion of the housing 110 of the battery pack 100. The cell is a secondary battery such as a lithium ion battery.

As illustrated in Fig. 1, the housing 110 is a housing member which has a space in a thin internal portion having a rectangular shape or a generally rectangular shape, for example. The housing 110 has a plurality of side wall parts 111 which demarcate a periphery of the housing 110, and in one of the side wall parts 111, the opening portion 120 is formed which allows an internal space S as a space of the internal portion of the housing 110 to communicate with an outside of the housing 110. In the side wall part 111, a plurality of screw holes 112 are formed around the opening portion 120. Into the screw hole 112, a screw 130 for fixing the pressure regulating valve 1 to the housing 110 is screwed. Note that the battery pack 100 illustrated in Fig. 1 is one example of a battery pack to which a pressure regulating valve according to the present invention is applied, and battery packs in various forms are included in the battery pack to which the pressure regulating valve according to the present invention is applied. Further, an application target for which the pressure regulating valve according to the present invention is used is not limited to a battery pack to be used for a vehicle such as an EV. The application target of the pressure regulating valve according to the present invention includes other application targets such as battery packs to be used for general industrial machines, construction machines, and so forth.

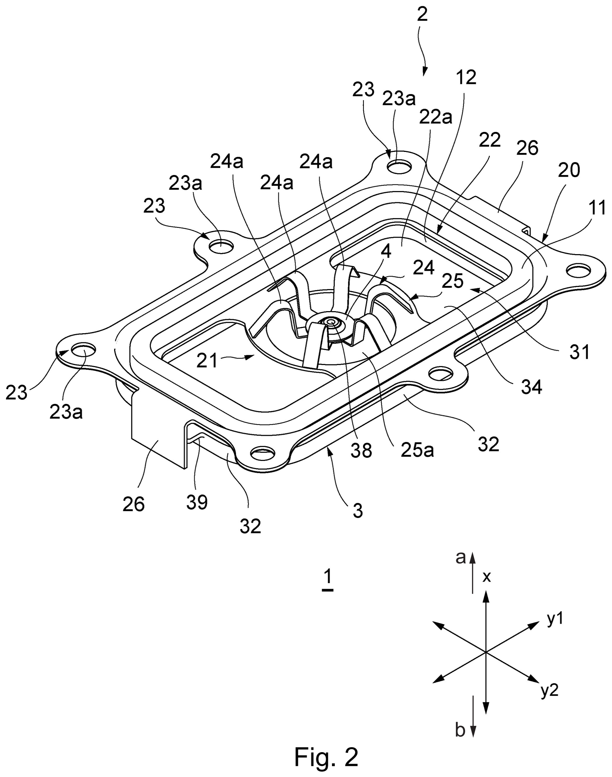

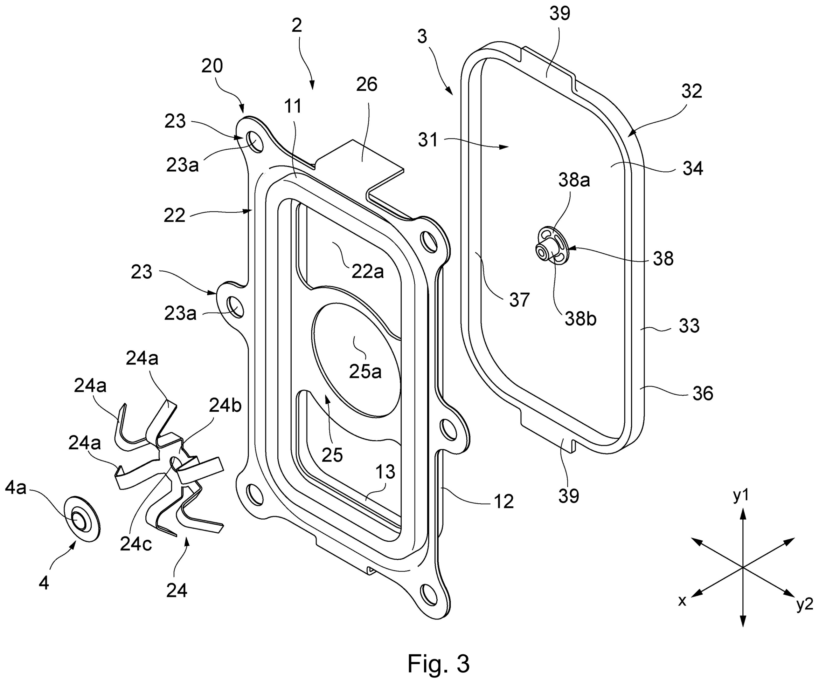

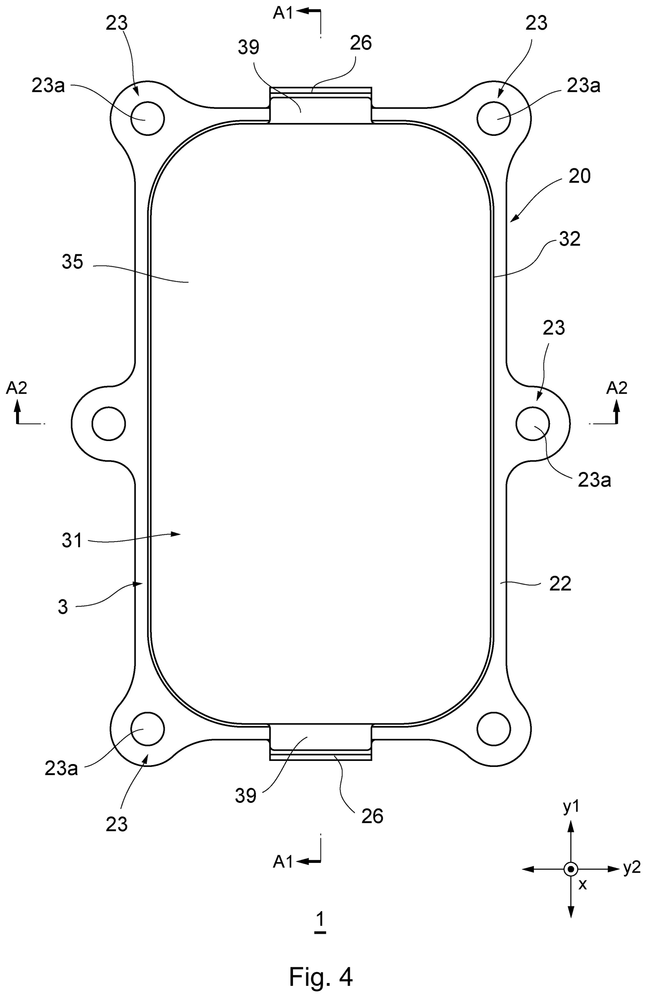

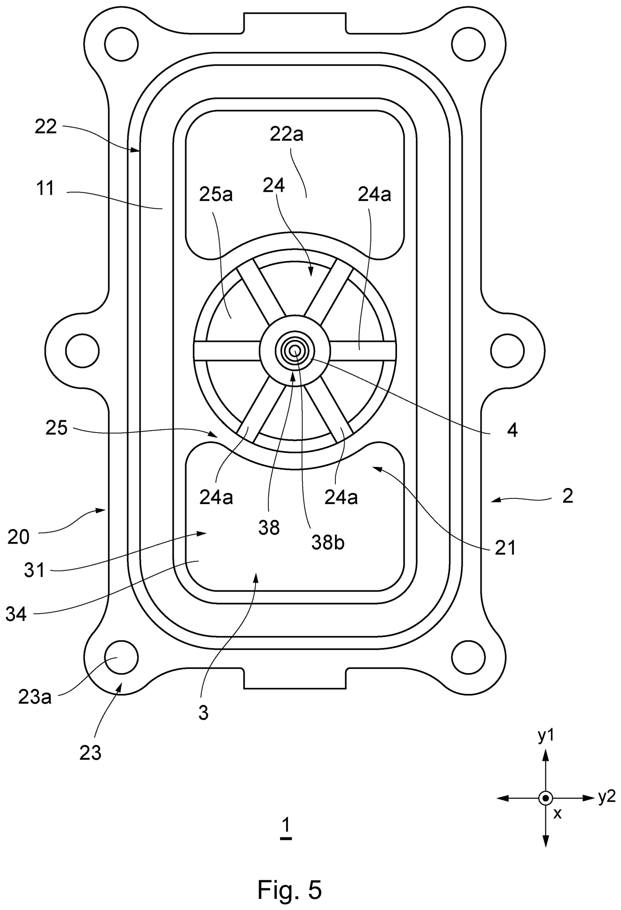

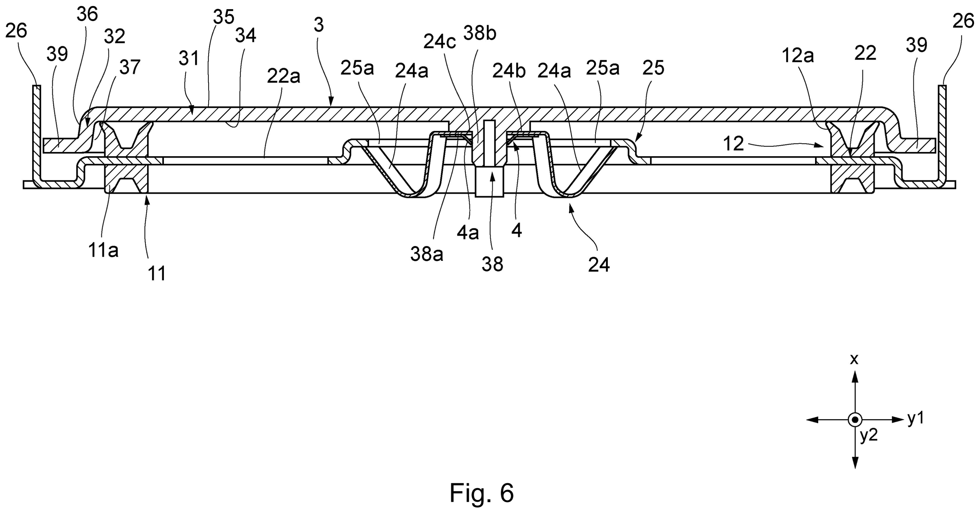

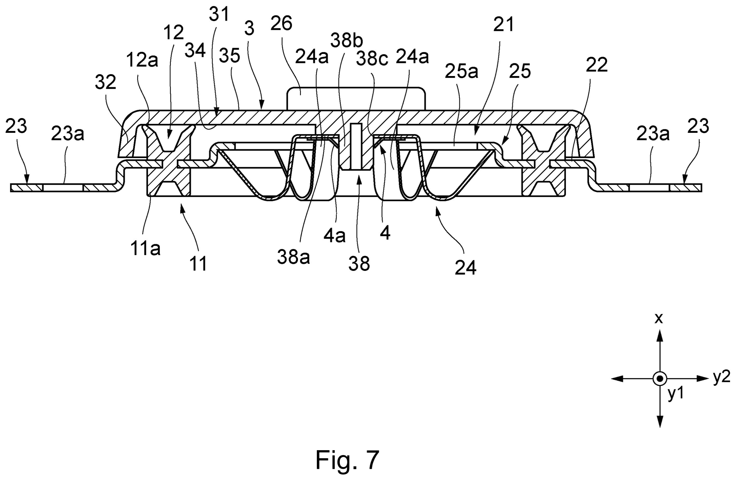

Fig. 2 is a perspective view which schematically illustrates a configuration of the pressure regulating valve 1, Fig. 3 is an exploded perspective view of the pressure regulating valve 1, Fig. 4 is a front view of the pressure regulating valve 1, and Fig. 5 is a rear view of the pressure regulating valve 1. Further, Fig. 6 is a cross-sectional view illustrating a cross section along line A1-A1 in Fig. 4, and Fig. 7 is a cross-sectional view illustrating a cross section along line A2-A2 in Fig. 4. As illustrated in Figs. 2 to 7, the pressure regulating valve 1 includes a base member 2 and a valve body member 3. The base member 2 has a first sealing portion 11 as an elastic body which surrounds the opening portion 120 from an outer periphery side and is annular around an axis line x, a second sealing portion 12 as an elastic body with which the valve body member 3 is provided to be contactable and which is annular around the axis line x, and a support portion 21 which supports the valve body member 3. The support portion 21 is configured to support a valve body member 2 such that it is movable in an axis line x direction so as to be contactable with the second sealing portion 12. The valve body member 3 has a contact portion 31 and a side wall part 32 which extends from the contact portion 31 toward one side in the axis line x direction. The contact portion 31 is configured to be contactable with the second sealing portion 12. The side wall part 32 is annular around the axis line x so as to cover the second sealing portion 12 from the outer periphery side and has an inclined portion 33. The inclined portion 33 expands to the outer periphery side as progresses toward the one side in the axis line x direction. Hereinafter, a configuration of the pressure regulating valve 1 will specifically be described.

As illustrated in Figs. 2 to 7, the pressure regulating valve 1 has a rectangular shape or a generally rectangular shape which extends long in one radial direction, as one example. Hereinafter, for convenience of description, a side toward one side in the axis line x direction (an arrow a direction in Fig. 2) is set as a lower side, and a side toward the other side in the axis line x direction (an arrow b direction in Fig. 2) is set as an upper side. Further, a direction orthogonal to the axis line x is the radial direction. Further, a direction in which the pressure regulating valve 1 extends long (an arrow y1 direction in Fig. 2) is set as a longitudinal direction, and a direction orthogonal to a longitudinal direction y1 (an arrow y2 direction in Fig. 2) is set as a short direction y2. Note that the shape of the pressure regulating valve 1 is not limited to an illustrated shape and can be various shapes in accordance with a form of the housing 110 of the battery pack 100 such as the opening portion 120 or the side wall part 111. For example, the pressure regulating valve 1 may have a shape such as a circular shape or a generally circular shape.

As illustrated in Figs. 2 to 7, specifically, the base member 2 has a frame body 20 in addition to the first sealing portion 11 and the second sealing portion 12. The frame body 20 is a frame member having a frame shape. The frame body 20 is formed of metal, for example. Specifically, for example, the frame body 20 is formed of stainless steel or the like. The frame body 20 has a shape corresponding to the pressure regulating valve 1, for example, a polygonal frame shape. In the present example, the frame body 20 has a rectangular or generally rectangular frame shape. Further, the frame body 20 has a frame main body 22, the above-described support portion 21, and a plurality of mounting projection portions 23.

The frame main body 22 is a frame-shaped portion, which mainly defines the shape of the frame body 20, and has a shape corresponding to the frame body 20. In the present example, the frame main body 22 is a portion having a rectangular or generally rectangular frame shape along a plane orthogonal to the axis line x. Further, as illustrated in Figs. 6 and 7, the frame main body 22 is a plate-shaped portion having a pair of surfaces which face away from each other. The support portion 21 is provided on an inner periphery side of the frame main body 22, and the plurality of mounting projection portions 23 are provided on an outer periphery side of the frame main body 22. The frame main body 22 has a shape corresponding to the opening portion 120 of the battery pack 100, in which the pressure regulating valve 1 opens and closes. Specifically, as described later, in the usage stage of the pressure regulating valve 1 mounted on the battery pack 100, the frame main body 22 has a shape which surrounds the opening portion 120 from the outer periphery side. Further, as illustrated in Figs. 6 and 7, in the frame main body 22, its end portion on the outer periphery side forms a step on the lower side, for example.

As illustrated in Figs. 2 to 4, the mounting projection portion 23 is a portion which protrudes from the end portion of the frame main body 22 on the outer periphery side toward the outer periphery side and has a plate shape which extends along a plane orthogonal to the axis line x, for example. The mounting projection portion 23 is a portion for fixing the pressure regulating valve 1 to the housing 110 of the battery pack 100 and has a configuration corresponding to fixing means for fixing the pressure regulating valve 1 to the battery pack 100. The fixing means is a screw, for example, and in this case, as illustrated in Figs. 2 to 4, a through hole 23a through which the mounting projection portion 23 passes is formed in the mounting projection portion 23. In the frame body 20, the through hole 23a of the mounting projection portion 23 corresponds to the screw hole 112 which is formed in the side wall part 111 of the housing 110 of the battery pack 100, and in the frame body 20, the mounting projection portion 23 is formed while corresponding to the screw hole 112 of the housing 110. As one example, the frame body 20 has six mounting projection portions 23. Note that the number of mounting projection portions 23 is not limited to six. In the frame body 20, the mounting projection portions 23 are arranged such that the through holes 23a of the mounting projection portions 23 respectively overlap the screw holes 112 of the housing 110. Note that the fixing means for fixing the pressure regulating valve 1 to the battery pack 100 is not limited to a screw and may be fixing means using an adhesive or the like, for example. In this case, the mounting projection portion 23 has a form corresponding to the fixing means.

As described above, the support portion 21 is a portion which supports the valve body member 3 such that the valve body member 3 is movable in the axis line x direction. Specifically, the support portion 21 has a spring body 24 which urges the valve body member 3 downward in the axis line x direction and a support frame portion 25 as a portion which supports the spring body 24. As illustrated in Figs. 2 to 4, the support frame portion 25 is provided on the inner periphery side of the frame main body 22 and is connected to the frame main body 22. Further, the support frame portion 25 has a through hole 25a having a shape corresponding to the spring body 24.

Further, as illustrated in Figs. 2 to 7, the frame body 20 has a plurality of protrusion portions 26. For example, the frame body 20 has two protrusion portions 26. The protrusion portions 26 are provided in positions opposite to each other in the longitudinal direction y1, for example. The protrusion portion 26 protrudes upward from the end portion of the frame main body 22 on the outer periphery side. The protrusion portion 26 has a plate shape.

Specifically, as described above, in the pressure regulating valve 1, the spring body 24 is configured to produce urging force which causes the contact portion 31 of the valve body member 3 to contact the second sealing portion 12. The spring body 24 is formed of metal, for example. Further, as illustrated in Figs. 2, 3, and 5 to 7, the spring body 24 is formed with a plurality of plate springs 24a which are collected together, for example. Specifically, for example, the plate spring 24a is curved so as to protrude between both ends, and the plurality of plate springs 24a are aligned in an annular shape at equal angle intervals or generally equal angle intervals from each other. Each of the plate springs 24a is connected to a ring portion 24b as an annular portion at one end and is fixed to the support frame portion 25 at another end. The ring portion 24b demarcates a through hole 24c in an internal portion. As illustrated in Figs. 6 and 7, in the pressure regulating valve 1 in an assembled state which will be described later, each of the plate springs 24a is curved such that a portion of the plate spring 24a on the ring portion 24b side passes through the through hole 25a of the support frame portion 25 and protrudes upward and the ring portion 24b can move to an upper side than the support frame portion 25. Note that a fixing method for the plate springs 24a and the support frame portion 25 is not particularly limited and may be any method such as adhesion, welding, or press fitting.

As illustrated in Figs. 2 to 7, the first sealing portion 11 extends along the frame main body 22 and is fixed to a surface which faces a lower side of the frame main body 22. The first sealing portion 11 has a shape corresponding to the opening portion 120 of the battery pack 100, in which the pressure regulating valve 1 opens and closes, specifically has a shape which surrounds the opening portion 120 from the outer periphery side in the battery pack 100, and has a shape which surrounds a through hole 22a from the outer periphery side, the through hole 22a being demarcated on the inner periphery side by the frame main body 22. Further, in the battery pack 100, the first sealing portion 11 is configured to contact the side wall part 111 of the housing 110. For example, as illustrated in Figs. 6 and 7, the first sealing portion 11 has two lips 11a in end portions on contact sides.

As illustrated in Figs. 2 to 7, the second sealing portion 12 extends along the frame main body 22 and is fixed to a surface which faces an upper side of the frame main body 22. The second sealing portion 12 extends in an annular shape and has a shape which surrounds the through hole 22a from the outer periphery side, the through hole 22a being demarcated on the inner periphery side by the frame main body 22. Further, in the pressure regulating valve 1, the second sealing portion 12 is configured to contact the contact portion 31 of the valve body member 3. For example, as illustrated in Figs. 6 and 7, the second sealing portion 12 has two lips 12a in end portions on contact sides.

As illustrated in Figs. 6 and 7, the first sealing portion 11 and the second sealing portion 12 are formed to face away from each other in the axis line x direction via the frame main body 22, for example, and are provided to face away from each other via the frame main body 22. Note that the first sealing portion 11 and the second sealing portion 12 may not be formed to face away from each other in the axis line x direction via the frame main body 22 or may not be provided to face away from each other via the frame main body 22. Further, the first sealing portion 11 and the second sealing portion 12 may integrally be formed. For example, the first sealing portion 11 and the second sealing portion 12 may be connected to each other in a part or all of the end portions facing away from the lips 11a and 12a. In this case, a through hole is formed in the frame main body 22, and a portion, in which the first sealing portion 11 and the second sealing portion 12 are connected, passes through the through hole. Each of the first sealing portion 11 and the second sealing portion 12 is an elastic body and is formed of an elastic material. The elastic material of each of the first sealing portion 11 and the second sealing portion 12 is an elastomer, for example, rubber, resin, or the like.

The valve body member 3 is a portion which functions as a valve body in the pressure regulating valve 1, has the contact portion 31 and the side wall part 32, and has a shape which covers the frame body 20. As illustrated in Figs. 3, 4, 6, and 7, specifically, the contact portion 31 has a contact surface 34 as a surface facing the lower side, and the contact surface 34 is configured to be contactable with the second sealing portion 12. For example, the contact portion 31 has an upper surface 35 as a surface which faces away from the contact surface 34 in the axis line x direction, and has a plate shape. Specifically, for example, as illustrated in Figs. 6 and 7, the contact surface 34 and the upper surface 35 are parallel or generally parallel with each other, and the contact portion 31 has a uniform or generally uniform thickness throughout the whole contact portion 31. Further, the contact surface 34 spreads in parallel or generally parallel with a plane orthogonal to the axis line x.

As illustrated in Figs. 4, 6, and 7, the contact portion 31 has a shape corresponding to the second sealing portion 12. Specifically, an outer periphery end 34a as an end of the contact surface 34 on the outer periphery side extends along the second sealing portion 12 and extends at an interval from the second sealing portion 12 to the outer periphery side. In the present example, the contact surface 34 has a rectangular shape or a generally rectangular shape, and similarly, the contact portion 31 has a rectangular shape or a generally rectangular shape.

The side wall part 32 extends downward from an end portion of the contact portion 31 on the outer periphery side and extends in an annular shape around the axis line x so as to cover the second sealing portion 12 from the outer periphery side at an interval. As illustrated in Figs. 6 and 7, the side wall part 32 has an outer peripheral surface 36 and an inner peripheral surface 37 as a pair of surfaces which face away from each other. Each of the outer peripheral surface 36 and the inner peripheral surface 37 is a tubular surface which extends along the axis line x, the outer peripheral surface 36 faces the outer periphery side, and the inner peripheral surface 37 faces the inner periphery side. For example, as illustrated in Figs. 6 and 7, the outer peripheral surface 36 and the inner peripheral surface 37 are parallel or generally parallel with each other, and the side wall part 32 has a uniform or generally uniform thickness throughout the whole side wall part 32. As described above, the side wall part 32 has the inclined portion 33 which expands to the outer periphery side as progresses downward along the axis line x. The inclined portion 33 may be formed in a part of a region of the side wall part 32 in the axis line x direction, and the whole side wall part 32 may be configured with the inclined portion 33. In the present example, the inclined portion 33 forms the whole side wall part 32. Details of the side wall part 32 will be described later.

Further, as illustrated in Figs. 3, 6, and 7, the valve body member 3 has a shaft portion 38. The shaft portion 38 is a columnar portion, which extends along the axis line x, and protrudes downward from the contact surface 34 of the contact portion 31. The shaft portion 38 is accommodated in the through hole 24c, which is demarcated by the ring portion 24b of the spring body 24, and is configured to be coupled to the spring body 24. For example, as illustrated in Figs. 6 and 7, the shaft portion 38 has a stepped surface 38a and has an engaging protruded portion 38b which protrudes from the stepped surface 38a. The stepped surface 38a is an annular surface portion which surrounds the axis line x, and extends along a plane orthogonal to the axis line x, for example. The stepped surface 38a forms a step in the radial direction in the shaft portion 32. The stepped surface 38a is formed to contact the ring portion 24b of the spring body 24. Further, the engaging protruded portion 38b is a tubular or columnar portion which extends along the axis line x and is formed to be capable of passing through the through hole 24c of the ring portion 24b of the spring body 24.

Further, as illustrated in Figs. 2 to 4 and 6, the valve body member 3 has a plurality of protrusion portions 39. The protrusion portions 39 are provided while corresponding to the protrusion portions 26 of the frame body 20, and in the present example, two protrusion portions 39 are provided. The two protrusion portions 39 are respectively provided at positions opposite to each other in the longitudinal direction y1, corresponding to the two protrusion portions 26 of the frame body 20, and protrude from end portions of the side wall part 32 on the lower side to the outer periphery side. The protrusion portion 39 extends along a plane orthogonal to the axis line x and has a plate shape, for example. Further, at a distal end, each of the protrusion portions 39 is configured to be opposite to the corresponding protrusion portion 26 of the frame body 20, from the inner periphery side via a gap. A predetermined width is provided for a gap between an end portion of the protrusion portion 39 on the outer periphery side and the frame body 20 and is set to such a width that in the usage state of the pressure regulating valve 1, which will be described later, when the valve body member 3 rotates around the shaft portion 38 as a center, the end portion of the protrusion portion 39 on the outer periphery side contacts the frame body 20. Note that at the distal end, each of the protrusion portions 39 may contact the corresponding protrusion portion 26 of the frame body 20 from the inner periphery side.

The valve body member 3 has the above-described configuration and is integrally formed of the same material. In other words, the contact portion 31, the side wall part 32, the shaft portion 38, and the protrusion portions 39 are portions of the valve body member 3, which is integrally formed, and are integrally connected. A material forming the valve body member 3 is metal or resin, for example. Note that the valve body member 3 may not integrally be formed of the same material. For example, a part of the configuration of the valve body member 3 may be formed as a separate body and may be fixed to other parts of the valve body member 3 by fixing means such as adhesion.

Further, the pressure regulating valve 1 has a fixing member 4 for coupling the spring body 24 to the valve body member 3. Specifically, the fixing member 4 is a member for fixing the engaging protruded portion 38b of the shaft portion 38 to the ring portion 24b, the engaging protruded portion 38b being inserted through the through hole 24c of the ring portion 24b of the spring body 24. For example, the fixing member 4 has an engaging tubular portion 4a which accommodates the engaging protruded portion 38b of the shaft portion 38 and is capable of engaging with the engaging protruded portion 38b. The engaging tubular portion 4a is a tubular portion which extends along the axis line x. An inner diameter of a region of a part of the engaging tubular portion 4a in the axis line x direction is smaller than an outer diameter of the engaging protruded portion 38b of the shaft portion 38, and when the engaging protruded portion 38b is inserted into the engaging tubular portion 4a, the engaging protruded portion 38b is press-fitted into the engaging tubular portion 4a. Accordingly, the engaging tubular portion 4a is capable of being fixed to the engaging protruded portion 38b, and the fixing member 4 is capable of being fixed to the engaging protruded portion 38b. The fixing member 4 is a push nut, for example. Note that a fixing structure of the fixing member 4 to the engaging protruded portion 38b is not limited to the above-described structure and may be engagement using a groove or a claw or another structure such as adhesion.

As illustrated in Figs. 6 and 7, the shaft portion 38 of the valve body member 3 is coupled to the spring body 24 of the base member 2, so that the pressure regulating valve 1 is in the assembled state where the elements are assembled. Specifically, the engaging protruded portion 38b of the shaft portion 38 is inserted in the through hole 24c of the ring portion 24b of the spring body 24, and the stepped surface 38a of the shaft portion 38 is caused to contact the ring portion 24b. In this state, the engaging protruded portion 38b is press-fitted into the engaging tubular portion 4a of the fixing member 4, and the fixing member 4 is caused to contact the ring portion 24b. Accordingly, the shaft portion 38 of the valve body member 3 is coupled to the spring body 24 of the base member 2. The fixing member 4 is fixed to the engaging protruded portion 38b in a state where the fixing member 4 contacts the ring portion 24b, and the ring portion 24b of the spring body 24 is held between the fixing member 4 and the stepped surface 38a of the shaft portion 38. Accordingly, the shaft portion 38 of the valve body member 3 is fixed to the spring body 24 of the base member 2, and the valve body member 3 and the base member 2 are coupled together.

As illustrated in Figs. 6 and 7, in the pressure regulating valve 1 in the assembled state, the contact surface 34 of the contact portion 31 of the valve body member 3 contacts the lips 12a of the second sealing portion 12. Further, the spring body 24 is elastically deformed and produces downward urging force, and the valve body member 3 is urged downward. Accordingly, the contact surface 34 of the contact portion 31 of the valve body member 3 is pressed onto the lips 12a of the second sealing portion 12. A magnitude of the downward urging force produced by the spring body 24 is set to a predetermined magnitude. In the usage state described later, when upward force of a predetermined magnitude is applied to the valve body member 3, the valve body member 3 moves upward, and contact between the contact surface 34 of the valve body member 3 and the second sealing portion 12 is canceled.

Further, as illustrated in Figs. 6 and 7, in the pressure regulating valve 1 in the assembled state, the side wall part 32 of the valve body member 3 is opposite to a side surface of the second sealing portion 12, from the outer periphery side via a gap. Further, a lower end 32a as an end of the side wall part 32 on the lower side is opposite to the base member 2 via a gap. Specifically, the lower end 32a of the side wall part 32 is opposite to a portion of the frame body 20 via a gap. For example, the lower end 32a of the side wall part 32 is opposite to the frame main body 22 of the frame body 20, from the upper side in the axis line x direction via a gap. Note that the lower end 32a of the side wall part 32 may be opposite to another portion of the frame body 20, from the upper side in the axis line x direction via a gap. For example, the lower end 32a of the side wall part 32 may be opposite to the mounting projection portion 23 of the frame body 20, from the upper side in the axis line x direction via a gap. In this case, the side wall part 32 covers, from the outer periphery side via a gap, a stepped portion of an outer periphery end portion of the frame main body 22 in addition to the second sealing portion 12. Further, in this case, the side wall part 32 is configured not to interfere with a screw which is caused to pass through the through hole 23a of the mounting projection portion 23. Note that for example, in a case where an influence is not exerted on sealing performance necessary for contact between the contact portion 31 of the valve body member 3 and the second sealing portion 12, the lower end 32a of the side wall part 32 may contact a portion of the frame body 20 such as the frame main body 22 or the mounting projection portion 23.

Further, as illustrated in Fig. 6, in the pressure regulating valve 1 in the assembled state, each of the end portions of the protrusion portions 39, on the outer periphery side, of the valve body member 3 is opposite to the corresponding protrusion portion 26 of the frame body 20, from the inner periphery side in the radial direction. Each of the end portions of the protrusion portions 39 on the outer periphery side is opposite to the corresponding protrusion portion 26 of the frame body 20, from the inner periphery side via a gap. A predetermined width is provided for the gap between the end portion of the protrusion portion 39 on the outer periphery side and the frame body 20 and is set to such a width that when the valve body member 3 rotates around the shaft portion 38 as the center, the end portion of the protrusion portion 39 on the outer periphery side contacts the corresponding protrusion portion 26 of the frame body 20. Note that each of the end portions of the protrusion portions 39 on the outer periphery side may contact the corresponding protrusion portion 26 of the frame body 20, from the inner periphery side.

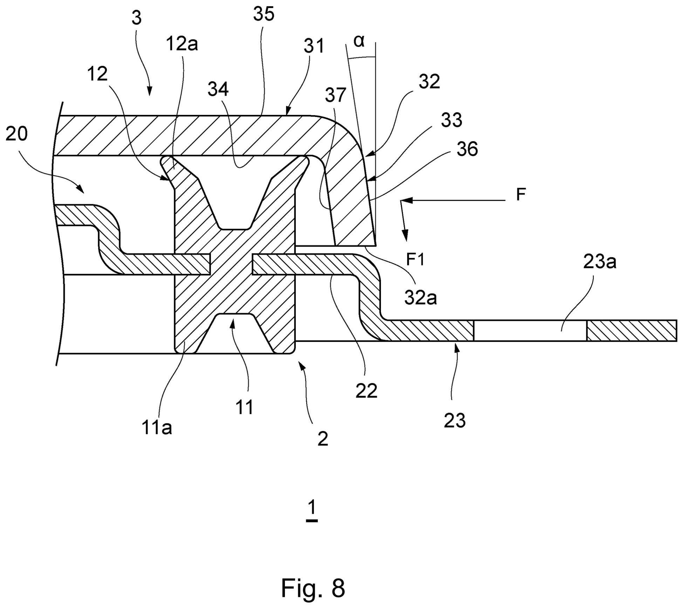

Next, a configuration of the side wall part 32 of the valve body member 3 will be described more in detail. Fig. 8 is a partially enlarged cross-sectional view illustrating the vicinity of the side wall part 32 in Fig. 7 while enlarging that. As described above, the side wall part 32 has the inclined portion 33, and in the present example, the whole side wall part 32 is configured with the inclined portion 33. As illustrated in Fig. 8, the outer peripheral surface 36 of the inclined portion 33 expands to the outer periphery side as progresses downward in the axis line x direction. Specifically, as illustrated in Fig. 8, in the cross section, the outer peripheral surface 36 as an inclined surface of the inclined portion 33 is inclined with respect to the axis line x and is, downward, inclined to the outer periphery side. For example, in the cross section, the outer peripheral surface 36 of the inclined portion 33 has a shape that forms a straight line or a generally straight line, which is inclined with respect to the axis line x, and in the cross section, an inclination angle as an angle between the axis line x and the outer peripheral surface 36 of the inclined portion 33 is set to an inclination angle α. The inclination angle α is set to a predetermined value, for example, and is specifically set to 5° or greater to 45° or smaller, for example.

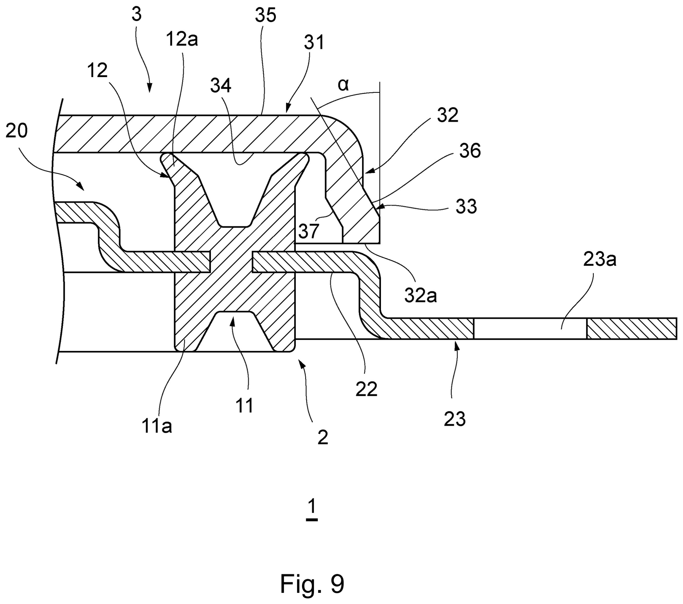

Fig. 9 is a partially enlarged cross-sectional view illustrating a modification example of the side wall part 32. As described above, the inclined portion 33 may be formed in a part of a region of the side wall part 32 in the axis line x direction, and for example, as illustrated in Fig. 9, the inclined portion 33 may be formed between both ends of the side wall part 32. In this case, a portion of the side wall part 32 except an inclined portion 32 extends in parallel or generally parallel with the axis line x. Note that the inclined portion 33 may be formed at any end of the side wall part 32 or in the vicinity thereof. Further, the side wall part 32 may have two or more inclined portions 33. For example, the side wall part 32 may have the two inclined portions 33 between both ends of the side wall part 32, may have the two inclined portions 33 between both ends of the side wall part 32 and at any end of the side wall part 32 or in the vicinity thereof, or may have the two inclined portions 33 at both ends of the side wall part 32 or in the respective vicinities thereof.

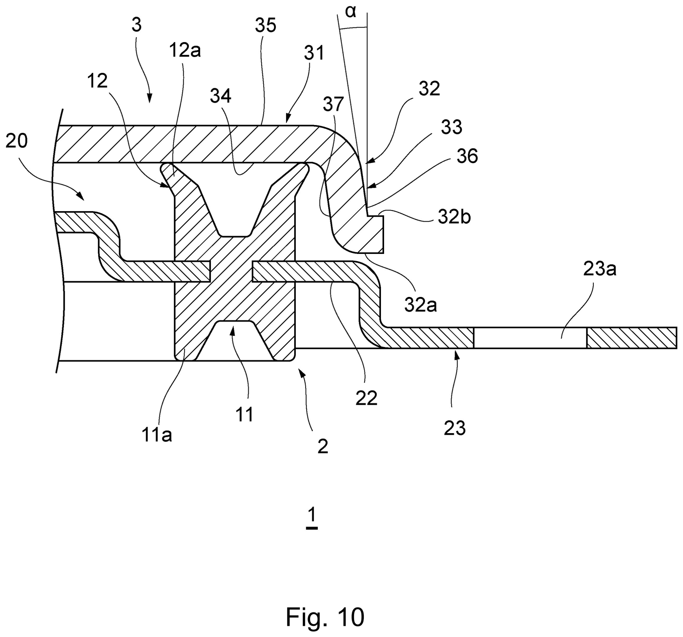

Fig. 10 is a partially enlarged cross-sectional view illustrating another modification example of the side wall part 32. As illustrated in Fig. 10, in the side wall part 32, a flange portion 32b as a portion which protrudes to the outer periphery side may be formed in the end portion on the lower side. The side wall part 32 has the flange portion 32b in the end portion on the lower side, and in a manufacturing method such as press molding of the valve body member 3, the inclination angle α of an inclined portion 32b can thereby precisely be formed to a desired angle.

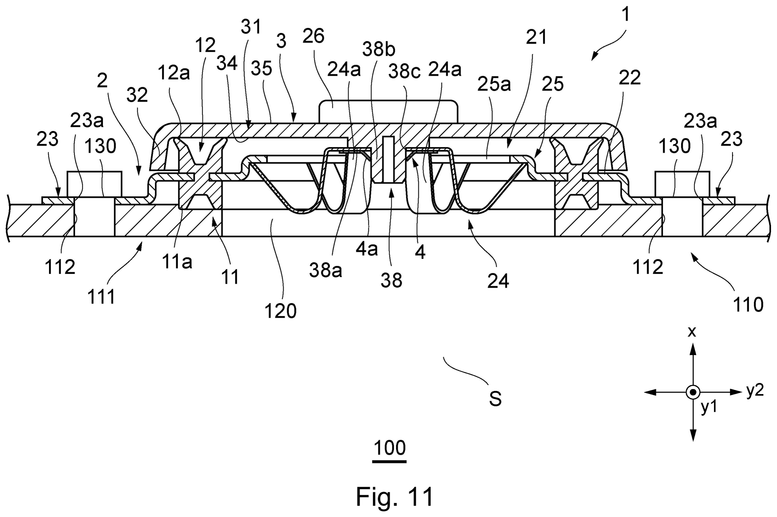

Next, a description will be made about actions of the pressure regulating valve 1 having the above-described configuration. Fig. 11 is a cross-sectional view illustrating the pressure regulating valve 1 in the usage state where the pressure regulating valve 1 is mounted on the side wall part 111 of the housing 110 of the battery pack 100. Note that in Fig. 11, the pressure regulating valve 1 is closed, and Fig. 11 illustrates the pressure regulating valve 1 in a closed usage state. The pressure regulating valve 1 covers the opening portion 120 which is formed in the side wall part 111 of the housing 110 and is fixed to the side wall part 111 by the screws 130. Specifically, the screw 130 is inserted through the through hole 23a of each of the mounting projection portions 23 of the frame body 20, the screws 130 are screwed into the corresponding screw holes 112 of a side wall 111, and the frame body 20 is thereby fixed to the side wall part 111. Accordingly, the pressure regulating valve 1 is fixed to the housing 110.

Further, as illustrated in Fig. 11, in the usage state, each of the lips 11a of the first sealing portion 11 is pressed onto a surface of the side wall part 111 and surrounds the opening portion 120 from the outer periphery side. Accordingly, the opening portion 120 is closed by the pressure regulating valve 1, and the internal space S of the housing 110 is tightly sealed. Note that as described above, the spring body 24 urges the valve body member 3 downward, urging force urging the valve body member 3 downward is applied to the valve body member 3, and the contact surface 34 of the contact portion 31 of the valve body member 3 is pressed onto each of the lips 12a of the second sealing portion 12.

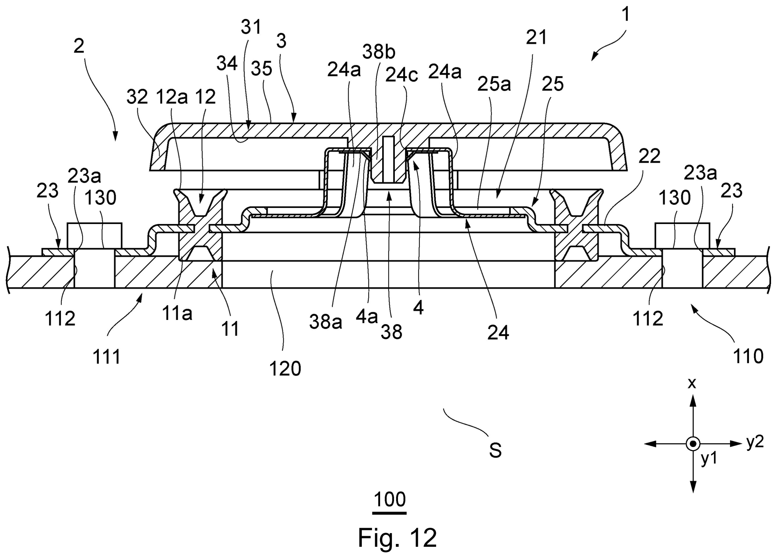

Fig. 12 is a cross-sectional view illustrating the pressure regulating valve 1 in the usage state where the pressure regulating valve 1 is mounted on the side wall part 111 of the housing 110 of the battery pack 100. Note that in Fig. 12, the pressure regulating valve 1 is open, and Fig. 12 illustrates the pressure regulating valve 1 in an open usage state.

When a battery of the battery pack 100 is charged or discharged and pressure of the internal space S of the housing 110 thereby becomes higher than predetermined pressure, due to this pressure, force larger than the urging force from the spring body 24 is applied to the contact surface 33 of the valve body member 3. Accordingly, the valve body member 3 is lifted upward, the contact surface 33 is moved apart from the lips 12a of the second sealing portion 12, contact between the valve body member 3 and the second sealing portion 12 is canceled, the pressure regulating valve 1 becomes an open state as illustrated in Fig. 12, and the opening portion 120 is made open to the outside of the housing 110. Accordingly, gas with which the internal space S of the housing 110 is filled is discharged to the outside of the housing 110. Accordingly, the pressure in the internal space S of the housing 110 can be prevented from becoming larger than the predetermined pressure, and the battery can be prevented from igniting, burning, or the like.

When the pressure regulating valve 1 becomes the open state, the opening portion 120 is made open to the outside of the housing 110, and the gas with which the internal space S of the housing 110 is filled is discharged to the outside of the housing 110, the pressure in the internal space S of the housing 110 lowers, and force to lift the valve body member 3 becomes smaller than the urging force from the spring body 24. Accordingly, the valve body member 3 moves downward and contacts the second sealing portion 12, and the pressure regulating valve 1 again becomes a closed state.

Further, as described above, each of the end portions of the protrusion portions 39, on the outer periphery side, of the valve body member 3 is opposite to the corresponding protrusion portion 26 of the frame body 20, from the inner periphery side in the radial direction. Thus, the valve body member 3 is inhibited from rotating around the shaft portion 38 in response to movement of the valve body member 3. Accordingly, sealing performance of the pressure regulating valve 1 is inhibited from lowering in response to opening or closing of the pressure regulating valve 1.

Further, force might be applied from the outside to the pressure regulating valve 1 in the closed usage state, which is illustrated in Fig. 8. For example, when water at a high pressure, which is jetted from a high-pressure washing machine or the like, hits the pressure regulating valve 1, due to that, force might be applied from the outside to the pressure regulating valve 1. In particular, when water at a high pressure is jetted onto the pressure regulating valve 1 in a direction orthogonal or generally orthogonal to the axis line x, the water at the high pressure enters the gap between the lower end 32a of the side wall part 32 of the valve body member 3 and the frame body 20, and force to lift the valve body member 3 upward might be applied. Depending on a magnitude of the pressure of water, there is a possibility that the valve body member 3 is lifted against the urging force of the spring body 24.

However, as described above, the side wall part 32 of the valve body member 3 has the inclined portion 33. Thus, as illustrated in Fig. 8, when the water at the high pressure is jetted onto the pressure regulating valve 1 in the direction orthogonal to the axis line x, the water also hits the outer peripheral surface 36, which is inclined, of the inclined portion 33. In this case, as illustrated in Fig. 8, force F, which is applied to the outer peripheral surface 36 of the inclined portion 33, has a component F1 of force directed downward and presses the inclined portion 33 downward. Thus, even when the water at the high pressure enters the gap between the lower end 32a of the side wall part 32 of the valve body member 3 and the frame body 20 and the force to lift the valve body member 3 is applied, the valve body member 3 is inhibited from being lifted by the force F1 which is applied to the inclined portion 33 and is directed downward. It can be considered that the force F1, which is applied to the inclined portion 33 and directed downward, is larger than the force to lift the valve body member 3, which is produced when the water at the high pressure enters the gap between the lower end 32a of the side wall part 32 of the valve body member 3 and the frame body 20. Thus, it can be considered that even when the water at the high pressure enters the gap between the lower end 32a of the side wall part 32 of the valve body member 3 and the frame body 20 and the force to lift the valve body member 3 is applied, the valve body member 3 can be prevented from being lifted by the force F1 which is applied to the inclined portion 33 and directed downward.

Thus, the pressure regulating valve 1 makes possible the sealing performance that satisfies a requirement for the high-pressure/steam-jet cleaning test which conforms to IPX9K based on JIS D 5020:2016.

As described above, the pressure regulating valve 1 according to the embodiment of the present invention can inhibit lowering of sealing performance due to force from the outside without adding elements in addition to the base member 2 and the valve body member 3.

In the foregoing, the present invention is described based on the above embodiments, but the technical scope of the present invention is not limited to the scope described in the above embodiments. It is clear for a person skilled in the art that various changes or improvements can be applied to the above embodiments. It is clear from descriptions of the claims that forms in which such changes or improvements are applied can be included in the technical scope of the present invention.

The embodiments described in the foregoing are for facilitating understanding of the present invention but are not for limited interpretation of the present invention. Further, the above-described embodiments do not limit use targets for which the present invention is used, and the present invention can include all articles as the use targets thereof. Each configuration element included in the above embodiments and its arrangement, material, condition, shape, size, and so forth are not limited to those raised as examples and can appropriately be changed. For example, the present invention includes differences that occur in practice such as tolerance in manufacture. Further, within the scope in which no technical contradiction occurs, the configuration elements mentioned in the different embodiments can partially be substituted or combined. Further, elements can be appropriately selectively combined such that at least a part of the above-described objects and effects are achieved.

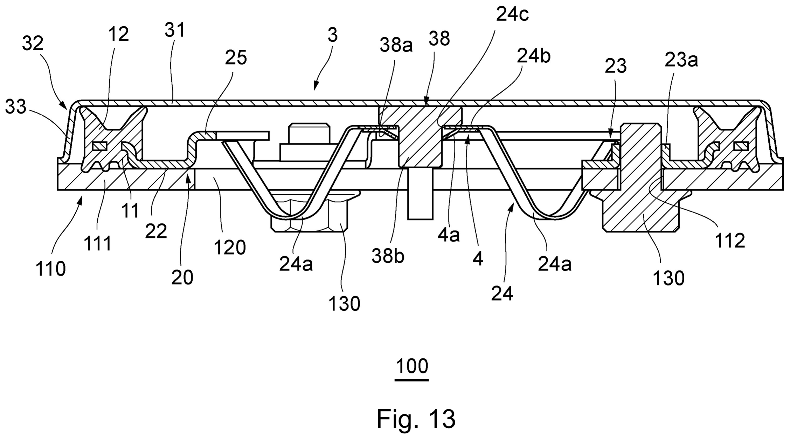

For example, as illustrated in Fig. 13, in the frame body 20, the mounting projection portion 23 may be formed to protrude from the frame main body 22 to the inner periphery side. In this case, as illustrated in Fig. 13, the lower end 32a of the side wall part 32 is opposite to the surface of the side wall part 111 of the housing 110. Note that Fig. 13 is a cross-sectional view illustrating one example of a modification example of the pressure regulating valve 1. Further, the pressure regulating valve 1 may not have a configuration for preventing rotation of the valve body member 3. Specifically, the frame body 20 may not have the protrusion portion 26, or the valve body member 3 may not have the protrusion portion 39.

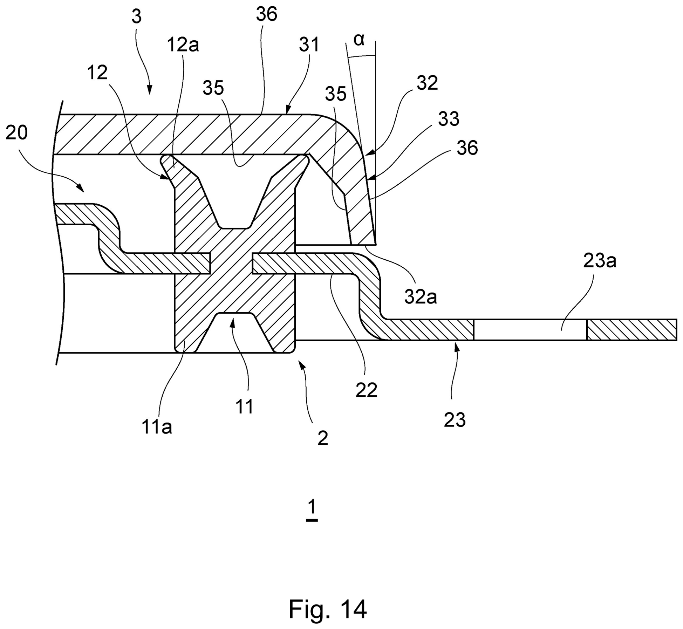

Further, as for the side wall part 32, rigidity may be enhanced for bending with respect to the contact portion 31. In other words, the side wall part 32 may have such a configuration that in a case where the side wall part 32 receives force from the outer periphery side, the side wall part 32 is less likely to be bent by this force. For example, as illustrated in Fig. 14, the side wall part does not have a uniform thickness, and an end portion on the contact portion 31 side is thick. Accordingly, in the side wall part 32, rigidity is enhanced for bending with respect to the contact portion 31, the side wall part 32 bends, the inclination angle α of the inclined portion 33 thereby changes, and the above-described effect of the inclined portion 33 can be inhibited from lowering.

### [Reference Signs List]

- 1: pressure regulating valve
- 2: base member
- 3: valve body member
- 4: fixing member
- 4a: engaging tubular portion
- 10 11: first sealing portion
- 11a: lip
- 12: second sealing portion
- 12a: lip
- 20: frame body
- 21: support portion
- 22: frame main body
- 22a: through hole
- 23: mounting projection portion
- 23a: through hole
- 24: spring body
- 24a: plate spring
- 24b: ring portion
- 24c: through hole
- 25: support frame portion
- 25a: through hole
- 26: protrusion portion
- 31: contact portion
- 32: side wall part
- 32a: lower end
- 32b: flange portion
- 33: inclined portion
- 34: contact surface
- 35: upper surface
- 36: outer peripheral surface
- 37: inner peripheral surface
- 38: shaft portion
- 38a: stepped surface
- 38b: engaging protruded portion
- 39: protrusion portion
- 100: battery pack
- 110: housing
- 111: side wall part
- 112: screw hole
- 120: opening portion
- 130: screw
- α: inclination angle
- F, F1: force
- S: internal space
- x: axis line
- y1: longitudinal direction
- y2: short direction

## Claims

1. A pressure regulating valve opening and closing an opening portion, the pressure regulating valve comprising:
a base member; and
a valve body member, wherein
the base member has a first sealing portion as an elastic body which surrounds the opening portion from an outer periphery side and is annular around an axis line, a second sealing portion as an elastic body with which the valve body member is provided to be contactable and which is annular around the axis line, and a support portion which supports the valve body member,
the support portion is configured to support the valve body member such that the valve body member is movable in the axis line direction so as to be contactable with the second sealing portion,
the valve body member has a contact portion and a side wall part which extends from the contact portion toward one side in the axis line direction,
the contact portion is configured to be contactable with the second sealing portion,
the side wall part is annular around the axis line so as to cover the second sealing portion from the outer periphery side and has an inclined portion, and
the inclined portion expands to the outer periphery side as progresses toward the one side in the axis line direction.

2. The pressure regulating valve according to claim 1, wherein
the inclined portion has an inclined surface which faces the outer periphery side and is annular around the axis line, and
the inclined surface expands to the outer periphery side as progresses toward the one side in the axis line direction.

3. The pressure regulating valve according to claim 2, wherein
the inclined surface is inclined at an inclination angle as a predetermined angle with respect to the axis line, and
the inclination angle is 5° or greater to 45° or smaller.

4. The pressure regulating valve according to claim 1, wherein
the side wall part is configured with the inclined portion.

5. The pressure regulating valve according to claim 1, wherein
the side wall part is configured to be opposite to the second sealing portion, from the outer periphery side, when the contact portion contacts the second sealing portion.

6. The pressure regulating valve according to claim 1, wherein
the side wall part is configured such that an end of the side wall part on the one side in the axis line direction is opposite to the base member via a gap when the contact portion contacts the second sealing portion.

7. The pressure regulating valve according to claim 1, wherein
the side wall part is configured such that rigidity against bending with respect to the contact portion is enhanced.

8. The pressure regulating valve according to claim 1, wherein
the side wall part has a flange portion as an annular portion, which protrudes to the outer periphery side, in a portion of an end of the side wall part on the one side in the axis line direction.

9. The pressure regulating valve according to claim 1, wherein
the contact portion has a contact surface which faces toward the one side in the axis line direction, and
the contact surface of the contact portion is contactable with the second sealing portion.

10. The pressure regulating valve according to claim 1, wherein
the support portion has a spring body which urges the valve body member toward the one side in the axis line direction.
